# EUROPÄISCHE PATENTSCHRIFT

(11) **EP 3 093 196 B1**
(45) Veröffentlichungstag und Bekanntmachung des Hinweises auf die Patenterteilung: **23.08.2017**
(21) Anmeldenummer: 15167444.7
(22) Anmeldetag: 12.05.2015
(51) Int. Cl.: B60R 1/076

(54) **VERSTELLBARE RÜCKBLICKVORRICHTUNG, VERFAHREN UND KRAFTFAHRZEUG**
ADJUSTABLE REAR VIEWING DEVICE, METHOD AND MOTOR VEHICLE
DISPOSITIF DE RÉTROVISEUR RÉGLABLE, PROCÉDÉ ET VÉHICULE AUTOMOBILE

(43) Veröffentlichungstag der Anmeldung: 16.11.2016
(73) Patentinhaber: SMR Patents S.à.r.l., 1653 Luxembourg (LU)
(72) Erfinder: Herrmann, Andreas, 71364 Winnenden-Baach (DE)
(74) Vertreter: Weber-Bruls, Dorothée

(56) Entgegenhaltungen:
- WO-A2-2007/031069
- GB-A- 1 346 945
- US-A- 4 523 735
- US-A1- 2005 219 722

## Beschreibung

Die vorliegende Erfindung betrifft eine verstellbare Rückblickvorrichtung, insbesondere Außenspiegel, für ein Kraftfahrzeug mit einem Spiegelkopf, mit einem Spiegelfuß und mit mindestens einer zwischen Spiegelkopf und Spiegelfuß angeordneten Gelenkeinrichtung, die mindestens ein Elastomerelement und eine Drehachse umfasst, um welche der Spiegelkopf bezüglich des Spiegelfußes von einer ersten Funktionsstellung, in der der Spiegelkopf durch das Elastomerelement gehalten ist, in mindestens eine zweite Funktionsstellung, in der das Elastomerelement gedehnt oder gestaucht ist, bewegbar ist insbesondere drehbar oder klappbar ist, und mit mindestens einem elektrischen Leitungsmittel, das zumindest zwischen Spiegelfuß und Spiegelkopf erstreckt ist und durch das elektrische Energie transportierbar ist. Darüber hinaus betrifft die Erfindung ein Verfahren zum Herstellen einer derartigen Rückblickvorrichtung, sowie ein Kraftfahrzeug mit einer derartigen Rückblickvorrichtung.

Verstellbare Rückblickvorrichtungen sind beispielsweise in Form von Außenspiegeln für Kraftfahrzeuge bekannt. Bei diesen ist ein Spiegelkopf gegenüber einem Spiegelfuß, der am Kraftfahrzeug festgelegt ist, drehend verstellbar. Das Verstellen kann bei den bekannten Rückblickvorrichtungen beispielsweise ein Abklappen des Außenspiegels, wenn das Kraftfahrzeug geparkt wird, umfassen. Hierzu ist zwischen Spiegelkopf und Spiegelfuß eine Gelenkeinrichtung angeordnet, die beispielsweise ein Elastomerelement umfassen kann. Eine derartige Rückblickvorrichtung nach dem Oberbegriff des Anspruchs 1 ist bekannt aus WO2007/031069 A2.

In den bekannten Rückblickvorrichtungen sind elektrische Verbraucher, wie Wiederholblinkleuchten, Totwinkelanzeigen und dergleichen, angeordnet, die über elektrische Leitungsmittel mit einer Stromquelle im Kraftfahrzeug zu verbinden sind. Im Bereich der Gelenkeinrichtung müssen die elektrischen Leitungsmittel mit genügend Spiel versehen sein, um den Bewegungen des Spiegelkopfs zum Spiegelfuß zerstörungsfrei folgen zu können. Darüber hinaus müssen die Leitungsmittel ausreichend fixiert festgelegt werden, um nicht unbeabsichtigt beschädigt werden zu können.

Die Montage derartiger Leitungsmittel sowie die Konstruktion der jeweiligen Bereiche der Gelenkeinrichtungen erweist sich als raumgreifend, umständlich und zeitaufwendig.

Eine Aufgabe eines Ausführungsbeispiels der Erfindung ist, eine verstellbare Rückblickvorrichtung vorzuschlagen, die kompakt baut und bei der die Montage des elektrischen Leitungsmittels vereinfacht ist.

Diese Aufgabe wird bei einer eingangs genannten verstellbaren Rückblickvorrichtung dadurch gelöst, dass das mindestens eine elektrische Leitungsmittel zumindest in Richtung seiner Längserstreckung elastisch verformbar ist.

Dadurch, dass das mindestens eine elektrische Leitungsmittel zumindest in Richtung seiner Längserstreckung elastisch verformbar ist, kann das mindestens eine Leitungsmittel eng am Elastomerelement geführt werden, ohne dass hierdurch eine Relativbewegung des Spiegelkopfs und Spiegelfußes zu einer Beschädigung des elektrischen Leitungsmittels führen kann. Hierdurch ist die Gelenkeinrichtung kompakt ausbildbar und die Montage der verstellbaren Rückblickvorrichtung vereinfacht.

Das elektrische Leitungsmittel kann grundsätzlich beliebig ausgebildet sein, sofern es die Funktion erfüllt, zumindest bezüglich seiner Längserstreckung elastisch verformbar zu sein und gleichzeitig seine stromführenden Eigenschaften nicht zu verlieren. Es erweist sich als vorteilhaft, wenn das mindestens eine elektrische Leitungsmittel mindestens eine Kohlenstoffnanoröhre oder eine Mehrzahl an Kohlenstoffnanoröhren umfasst.

Um den Leistungsverlust innerhalb des elektrischen Leitungsmittels zu reduzieren, insbesondere um die Gefahr von Leckströmen zu reduzieren, erweist es sich als vorteilhaft, wenn die Rückblickvorrichtung mindestens ein, insbesondere elektrisch isolierendes, Isolationsmittel für das mindestens eine elektrische Leitungsmittel umfasst.

In Weiterbildung letztgenannter Ausführungsform lässt sich das Isolationsmittel einfach und kostengünstig realisieren, wenn die mindestens eine Kohlenstoffnanoröhre mindestens eine unoxidierte innere stromleitende Schicht und mindestens eine oxidierte äußere isolierende Schicht umfasst, die insbesondere das Isolationsmittel umfasst und/oder die mindestens eine Kohlenstoffnanoröhre von Außen zumindest nahezu in Gänze umgibt.

Um die Isolationswirkung weiter zu erhöhen kann bei einer Weiterbildung der letztgenannten Ausführungsform ein zusätzliches Isolationselement vorgesehen sein, das eine weitere Isolationsschicht für das elektrische Leitungsmittel bildet.

Grundsätzlich ist es denkbar, dass das zumindest eine elektrische Leitungsmittel im Bereich der Gelenkeinrichtung außerhalb des Elastomerelements verlaufend angeordnet ist. Es erweist sich jedoch als vorteilhaft, wenn das mindestens eine elektrische Leitungsmittel zumindest im Bereich der Gelenkeinrichtung zumindest überwiegend innerhalb des Elastomerelements verlaufend angeordnet ist.

Dadurch, dass das elektrische Leitungsmittel zumindest in dem Bereich der Gelenkeinrichtung innerhalb des Elastomerelements verlaufend angeordnet ist, bildet die Gelenkeinrichtung eine vormontierte Baugruppe, wodurch die Montage der Rückblickvorrichtung vereinfacht ist. Darüber hinaus ist eine Beschädigung des Leitungsmittels, wenn es innerhalb des Elastomerelements verlaufend angeordnet ist, weiter reduziert.

Grundsätzlich ist es denkbar, dass die durch das elektrische Leitungsmittel transportierte elektrische Energie ausreicht, um sämtliche im Spiegelkopf angeordnete elektrische Verbraucher mit Energie zu versorgen. Um jedoch bei Leistungsspitzen ausreichend Energie zur Verfügung zu haben oder wenn beispielsweise die Versorgung durch elektrische Energie fahrzeugseitig ausfällt, erweist sie sich als vorteilhaft, wenn in der Rückblickvorrichtung mindestens ein im Spiegelkopf angeordneter Energiespeicher vorgesehen ist, der insbesondere einen Nano-Tube-Kapazitator umfassen kann. Hierdurch können Leistungsspitzen, die durch die Leitfähigkeit zwecks elektrischer Leitungsmittel nicht ausreichend bedient werden können, durch den Energiespeicher ausgeglichen werden. Bei einem Ausfall der Stromversorgung des Kraftfahrzeuges können durch den Energiespeicher Notfallwarnanzeigen zumindest für eine gewisse Zeit weiter betrieben werden.

Bei einem weiteren Ausführungsbeispiel umfasst die Rückblickvorrichtung mindestens zwei elektrische Leitungsmittel, wobei ein erstes elektrisches Leitungsmittel mittelbar oder unmittelbar mit einem elektrischen Verbraucher, wie Leuchtmittel, insbesondere LED, oder Elektromotor, verbindbar oder verbunden ist und/oder wobei mindestens ein zweites elektrisches Leitungsmittel unmittelbar oder mittelbar mit dem mindestens einen Energiespeicher verbindbar oder verbunden ist.

Hierdurch ist die Redundanz der Energieversorgung innerhalb der Rückblickvorrichtung weiter erhöht.

Wenn mindestens zwei elektrische Leitungsmittel vorgesehen sind, kann zumindest eines der mindestens zwei elektrischen Leitungsmittel innerhalb des Elastomerelements verlaufend angeordnet sein und das zweite elektrische Leitungsmittel außerhalb des Elastomerelements verlaufend angeordnet sein. Darüber hinaus ist es auch denkbar, dass beide oder mehrere der elektrischen Leitungsmittel innerhalb des Elastomerelements verlaufend angeordnet sind.

Um die durch das elektrische Leitungsmittel transportierbare Energiemenge effizient verteilen zu können, ist bei einem Ausführungsbeispiel der Rückblickvorrichtung mindestens eine Steuereinheit mit mindestens einer in der Steuereinheit hinterlegten Steuerlogik, zum Priorisieren der Zuteilung elektrischer Energie an eine Mehrzahl an elektrischen Verbrauchern, durch das mindestens eine elektrische Leitungsmittel und/oder durch den mindestens einen Energiespeicher, vorgesehen.

Darüber hinaus erweist es sich als vorteilhaft, wenn das Elastomerelement an den Spiegelkopf und/oder an den Spiegelfuß angeformt ist und/oder wenn das Elastomerelement und das mindestens eine elektrische Leitungsmittel mittels eines Mehrkomponenten-Spritzgussverfahrens in den Spiegelkopf oder den Spiegelfuß integriert sind.

Um auf einfache Weise mit einer Stromquelle des Kraftfahrzeugs eine Verbindung herzustellen erweist es sich als vorteilhaft, wenn die Rückblickvorrichtung mindestens ein Kontaktmittel des elektrischen Leitungsmittels umfasst, das an dem dem Kraftfahrzeug zugewandten Ende des Leitungsmittels anordenbar ist und mit dem eine Verbindung zu einer Stromquelle des Kraftfahrzeugs herstellbar ist.

Darüber hinaus wird die Aufgabe gelöst durch ein Verfahren zum Herstellen einer Rückblickvorrichtung mit mindestens einem der zuvor genannten Merkmale, mit einem Spiegelfuß, mit einem Spiegelkopf, mit mindestens einem Elastomerelement und mit mindestens einem elektrischen Leitungsmittel das zumindest in Richtung seiner Längserstreckung elastisch verformbar ist, mit den Schritten:
a. An- oder Einlegen des Spiegelfußes in ein Spritzgusswerkzeug;
b. An- oder Einlegen des Spiegelkopfs in das Spritzgusswerkzeug;
c. Einlegen des mindestens einen elektrischen Leitungsmittels;
d. Einspritzen des Mehr-Komponenten-Elastomerelements.

Solchenfalls ist das elektrische Leitungsmittel innerhalb des Elastomerelements verlaufend angeordnet.

Besonders vorteilhaft ist hierbei, dass innerhalb eines Werkzeuges die Gelenkeinrichtung sowie die Energieversorgung durch das elektrische Leitungsmittel herstellbar ist, wodurch der Produktionsprozess effizienter gestaltbar ist und eine Montage der Gelenkeinrichtung in der Rückblickvorrichtung vereinfacht und erleichtert ist.

Bei einer Weiterbildung des Verfahrens erweist es sich als vorteilhaft, wenn das Einspritzen des Mehr-KomponentenElastomerelements ein Anformen des Elastomerelements an den Spiegelfuß und/oder an den Spiegelkopf umfasst.

Schließlich lässt sich das Produktionsverfahren des Herstellungsverfahrens der verstellbaren Rückblickvorrichtung noch effizienter gestalten, wenn es den weiteren Verfahrensschritt umfasst:
Umspritzen des mindestens einen elektrischen Leitungsmittels mit einem zusätzlichen Isolationselement.

Hierbei erweist es sich als vorteilhaft, wenn das Umspritzen des mindestens einen elektrischen Leitungsmittels mit einem zusätzlichen Isolationselement vor dem Schritt Einspritzen des Mehr-Komponenten-Elastomerelements in das Spritzgusswerkzeug stattfindet.

Schließlich wird die Aufgabe gelöst durch ein Kraftfahrzeug mit mindestens einer Rückblickvorrichtung mit mindestens einem der zuvor genannten Merkmale.

Die verstellbare Rückblickvorrichtung, das Verfahren zum Herstellen einer derartigen Rückblickvorrichtung sowie das Kraftfahrzeug mit einer derartigen Rückblickvorrichtung erweisen sich in mehrfacher Hinsicht als vorteilhaft:
Dadurch, dass das zumindest eine elektrische Leitungsmittel bezüglich seiner Längserstreckung elastisch verformbar ist, kann die Gelenkeinrichtung kompakt ausgebildet werden.

Dadurch, dass das mindestens eine elektrische Leitungsmittel innerhalb des Elastomerelements verlaufend anordenbar ist, ist die Gelenkeinrichtung kompakt ausbildbar und die Gefahr einer Beschädigung des mindestens einen elektrischen Leitungsmittels weiter reduziert.

Weitere Merkmale, Einzelheiten sowie Vorteile entnehmen sich aus den beigefügten Patentansprüchen, aus der zeichnerischen Darstellung und nachfolgender Beschreibung bevorzugter Ausführungsformen der verstellbaren Rückblickvorrichtung.

In der Zeichnung zeigt:
- Figur 1: eine schematische Darstellung eines ersten Ausführungsbeispiels der Rückblickvorrichtung;
- Figur 2: eine schematische Darstellung eines zweiten Ausführungsbeispiels der Rückblickvorrichtung;
- Figur 3: eine schematische Detailansicht eines dritten Ausführungsbeispiels der Rückblickvorrichtung;
- Figur 4: eine schematische Detailansicht eines vierten Ausführungsbeispiels der Rückblickvorrichtung;
- Figur 5: ein schematisches Ablaufdiagramm des Verfahrens zum Herstellen einer Rückblickvorrichtung.

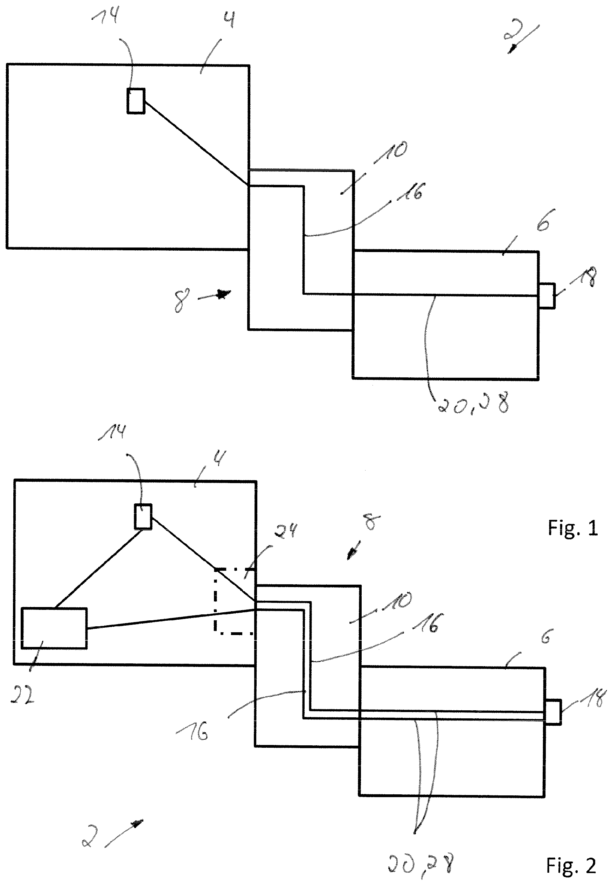

Figur 1 zeigt ein erstes Ausführungsbeispiel einer insgesamt mit dem Bezugszeichen 2 versehenen Rückblickvorrichtung für ein Kraftfahrzeug. Die Rückblickvorrichtung 2 umfasst einen Spiegelkopf 4 und einen Spiegelfuß 6. Zwischen dem Spiegelkopf 4 und dem Spiegelfuß 6 ist eine Gelenkeinrichtung 8 angeordnet, die ein Elastomerelement 10 und eine Drehachse 12 (in den Figuren 1 und 2 nicht dargestellt) umfasst. Der Spiegelkopf 4 ist durch die Gelenkeinrichtung 8 bezüglich des Spiegelfußes 6 drehbar oder klappbar. Um im Spiegelkopf 4 angeordnete elektrische Verbraucher 14 mit elektrischer Energie versorgen zu können, umfasst die Rückblickvorrichtung 2 ein elektrisches Leitungsmittel 16, das zwischen Spiegelfuß 6 und Spiegelkopf 4 erstreckt ist und durch das elektrische Energie transportierbar ist. Das in den Figuren 1 bis 4 gezeigte elektrische Leitungsmittel 16 ist in Richtung seiner Längsstreckung elastisch verformbar.

Darüber hinaus umfasst die Rückblickvorrichtung 2 ein Kontaktmittel 18, mit dem das elektrische Leitungsmittel 16 an seinem dem Kraftfahrzeug zugewandten Ende mit einer Stromquelle des Kraftfahrzeuges verbindbar ist. Das in den Figuren 1 bis 4 gezeigte elektrische Leitungsmittel umfasst mindestens eine Kohlenstoffnanoröhre. Darüber hinaus ist das elektrische Leitungsmittel 18 durch ein elektrisch isolierendes Isolationsmittel 20 umgeben, das beispielsweise durch eine oxidierte äußere isolierende Schicht der Kohlenstoffnanoröhre gebildet ist. Diese oxidierte äußere Schicht umgibt das als Kohlenstoffnanoröhre ausgebildete elektrische Leitungsmittel 16 in Gänze.

Figur 2 zeigt ein zweites Ausführungsbeispiel der Rückblickvorrichtung 2, bei der zwei elektrische Leitungsmittel 16 vorgesehen sind. Hierbei ist ein erstes elektrisches Leitungsmittel 16 unmittelbar mit einem elektrischen Verbraucher 14 verbunden, wobei ein zweites elektrisches Leitungsmittel 16 mit einem Energiespeicher 22 verbunden ist, um diesen mit elektrischer Energie seitens der Stromquelle des Kraftfahrzeugs zu versorgen. Der Energiespeicher 22 ist seinerseits wieder mit dem elektrischen Verbraucher 14 verbunden und versorgt diesen mit elektrischer Energie, beispielsweise wenn die durch die elektrische Leitungsmittel 16 transportierte Energie nicht ausreicht, um den elektrischen Verbraucher 14 zu versorgen. Darüber hinaus umfasst das Ausführungsbeispiel gemäß Figur 2 eine Steuereinheit 24 durch die die zur Verfügung stehende elektrische Energie mittels einer in der Steuereinheit 24 hinterlegten Steuerlogik den jeweiligen elektrischen Verbrauchern 14 zugeteilt wird.

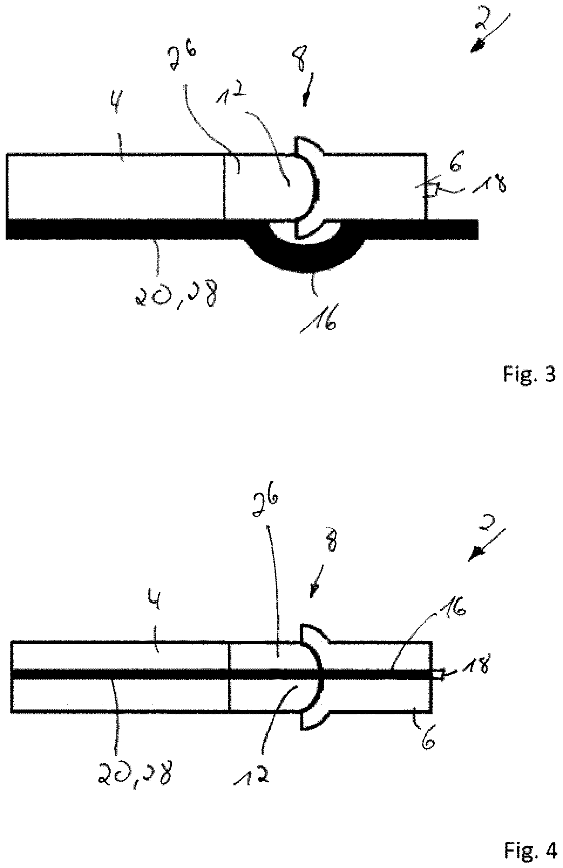

Anhand der Figuren 3 und 4 sind weitere Ausführungsbeispiele ersichtlich, die mit den Ausführungsbeispielen der Figuren 1 kombinierbar sind. So ist in Figur 3 der Bereich der Gelenkeinrichtung 8 dargestellt, in der das elektrische Leitungsmittel 16 außerhalb eines Elastomerelements 26 der Gelenkeinrichtung 8 verlaufend angeordnet ist.

Figur 4 zeigt einen Ausschnitt der Gelenkeinrichtung 8, bei der das elektrische Leitungsmittel 16 innerhalb des Elastomerelements 26 verlaufend angeordnet ist.

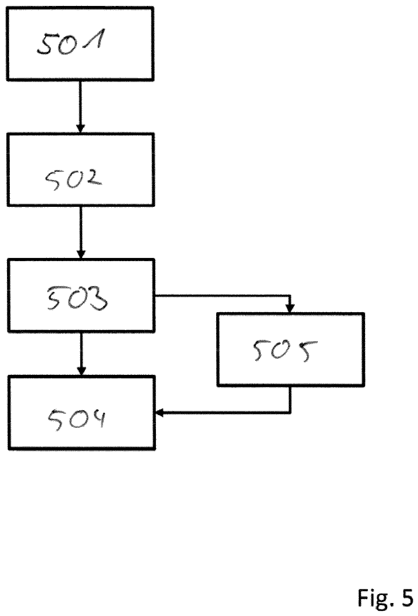

Figur 5 zeigt ein schematisches Ablaufdiagramm eines Verfahrens zum Herstellen einer Gelenkeinrichtung der Rückblickvorrichtung. Hierbei wird in einem ersten Schritt 501 der Spiegelfuß 6 der Rückblickvorrichtung 2 in ein Spritzgusswerkzeug eingelegt.

In einem Schritt 502 wird der Spiegelkopf 4 der Gelenkeinrichtung 8 in das Spritzgusswerkzeug eingelegt. In einem Schritt 503 wird das mindestens eine elektrische Leitungsmittel 16 in das Spritzgusswerkzeug eingelegt. In einem Schritt 504 wird das Elastomerelement durch Einspritzen eines Mehrkomponentenkunststoffes hergestellt. Optional kann in einem Schritt 505 vor Schritt 504 das elektrische Leitungsmittel mit einem zusätzlichen Isolationselement 28 umspritzt werden.

Das Einspritzen des Mehr-Komponenten-Elastomerelements 26 kann hierbei ein Anformen des Elastomerelements 26 an den Spiegelfuß 6 und/oder Spiegelkopf 4 umfassen.

Die in der vorstehenden Beschreibung, in den Ansprüchen, sowie in der Zeichnung gezeigten Merkmale der Erfindung können sowohl einzeln, als auch in jeder beliebigen Kombination in der Verwirklichung der Erfindung und ihrer verschiedenen Ausführungsformen wesentlich sein.

### Bezugszeichenliste

- 2: Rückblickvorrichtung
- 4: Spiegelkopf
- 6: Spiegelfuß
- 8: Gelenkeinrichtung
- 10: Elastomerelement
- 12: Drehachse
- 14: elektrischer Verbrauch
- 16: elektrisches Leitungsmittel
- 18: Kontaktmittel
- 20: Isolationsmittel
- 22: Energiespeicher
- 24: Steuereinheit
- 26: Elastomerelement
- 28: zusätzliches Isolationselement

## Patentansprüche

1. Verstellbare Rückblickvorrichtung (2), insbesondere Außenspiegel, für ein Kraftfahrzeug mit einem Spiegelkopf (4), mit einem Spiegelfuß (6) und mit mindestens einer zwischen Spiegelkopf (4) und Spiegelfuß (6) angeordneten Gelenkeinrichtung (8), die mindestens ein Elastomerelement (10) und eine Drehachse (12) umfasst, um welche der Spiegelkopf (4) bezüglich des Spiegelfußes (6) von einer ersten Funktionsstellung, in der der Spiegelkopf (4) durch das Elastomerelement (26) gehalten ist, in mindestens eine zweite Funktionsstellung, in der das Elastomerelement (26) gedehnt oder gestaucht ist, bewegbar ist insbesondere drehbar oder klappbar ist, und mit mindestens einem elektrischen Leitungsmittel (16), das zumindest zwischen Spiegelfuß (6) und Spiegelkopf (4) erstreckt ist und durch das elektrische Energie transportierbar ist, **dadurch gekennzeichnet, dass** das mindestens eine elektrische Leitungsmittel (16) zumindest in Richtung seiner Längserstreckung elastisch verformbar ist.

2. Rückblickvorrichtung (2) nach Anspruch 1, **dadurch gekennzeichnet, dass** das mindestens eine elektrische Leitungsmittel (16) mindestens eine Kohlenstoffnanoröhre oder eine Mehrzahl an Kohlenstoffnanoröhren umfasst.

3. Rückblickvorrichtung (2) nach Anspruch 1 oder 2, mit mindestens einem, insbesondere elektrisch isolierenden, Isolationsmittel (20) für das mindestens eine elektrische Leitungsmittel (16).

4. Rückblickvorrichtung (2) nach Anspruch 3, **dadurch gekennzeichnet dass** die mindestens eine Kohlenstoffnanoröhre mindestens eine unoxidierte innere stromleitende Schicht und mindestens eine oxidierte äußere isolierende Schicht umfasst, die insbesondere das Isolationsmittel (20) umfasst und/oder die mindestens eine Kohlenstoffnanoröhre von Außen zumindest nahezu in Gänze umgibt.

5. Rückblickvorrichtung (2) nach Anspruch 3 oder 4, **gekennzeichnet durch** ein zusätzliches Isolationselement (28), das eine weitere Isolationsschicht für das elektrische Leitungsmittel (16) bildet.

6. Rückblickvorrichtung (2) nach mindestens einem der vorhergehenden Ansprüche, **dadurch gekennzeichnet, dass**
das mindestens eine elektrische Leitungsmittel (16) zumindest im Bereich der Gelenkeinrichtung (8) zumindest überwiegend innerhalb des Elastomerelements (10) verlaufend angeordnet ist.

7. Rückblickvorrichtung (2) nach mindestens einem der vorhergehenden Ansprüche, **gekennzeichnet durch**
mindestens einen im Spiegelkopf (4) angeordneten Energiespeicher (22), insbesondere einem Nano-Tube-Kapazitator.

8. Rückblickvorrichtung (2) nach mindestens einem der vorhergehenden Ansprüche, **gekennzeichnet durch**
mindestens zwei elektrische Leitungsmittel, wobei ein erstes elektrisches Leitungsmittel mittelbar oder unmittelbar mit einem elektrischen Verbraucher (14), wie Leuchtmittel, insbesondere LED, oder Elektromotor, verbindbar oder verbunden ist und/oder wobei mindestens ein zweites elektrisches Leitungsmittel unmittelbar oder mittelbar mit dem mindestens einen Energiespeicher verbindbar oder verbunden ist.

9. Rückblickvorrichtung (2) nach mindestens einem der vorhergehenden Ansprüche, **gekennzeichnet durch**
mindestens eine Steuereinheit (24) mit mindestens einer hinterlegten Steuerlogik, zum Priorisieren der Zuteilung elektrischer Energie an eine Mehrzahl an elektrischen Verbrauchern, durch das mindestens eine elektrische Leitungsmittel (16) und/oder durch den mindestens einen Energiespeicher (22).

10. Rückblickvorrichtung (2) nach mindestens einem der vorhergehenden Ansprüche, **dadurch gekennzeichnet, dass**
das Elastomerelement (10) an den Spiegelkopf (4) und/oder an den Spiegelfuß (6) angeformt ist und/oder dass das Elastomerelement und das mindestens eine elektrische Leitungsmittel (16) mittels eines Mehrkomponenten-Spritzgussverfahrens in den Spiegelkopf (4) oder den Spiegelfuß (6) integriert sind.

11. Rückblickvorrichtung (2) nach mindestens einem der vorhergehenden Ansprüche, **gekennzeichnet durch**
mindestens ein Kontaktmittel (18) des elektrischen Leitungsmittels (16), das an dem dem Kraftfahrzeug zugewandten Ende des Leitungsmittels anordenbar ist und mit dem eine Verbindung zu einer Stromquelle des Kraftfahrzeugs herstellbar ist.

12. Verfahren zum Herstellen einer Gelenkeinrichtung (8) einer Rückblickvorrichtung (2) nach einem der Ansprüche 1 bis 11, mit einem Spiegelfuß (6), mit einem Spiegelkopf (4), mit mindestens einem Elastomerelement (10) und mit mindestens einem elektrischen Leitungsmittel (16) das zumindest in Richtung seiner Längserstreckung elastisch verformbar ist, mit den Schritten:
a. An- oder Einlegen des Spiegelfußes (6) in ein Spritzgusswerkzeug;
b. An- oder Einlegen des Spiegelkopfs (4) in das Spritzgusswerkzeug;
c. Einlegen des mindestens einen elektrischen Leitungsmittels (16);
d. Einspritzen des Mehr-Komponenten-Elastomerelements (10).

13. Verfahren nach Anspruch 12, **dadurch gekennzeichnet, dass**
das Einspritzen des Mehr-Komponenten-Elastomerelements (10) ein Anformen des Elastomerelements (10) an den Spiegelfuß (6) und/oder an den Spiegelkopf (4) umfasst.

14. Verfahren nach Anspruch 12 oder 13, **gekennzeichnet durch** den Schritt:
e. Umspritzen des mindestens einen elektrischen Leitungsmittels (16) mit einem zusätzlichen Isolationselement (28).

15. Kraftfahrzeug mit mindestens einer Rückblickvorrichtung (2) nach einem der Ansprüche 1 bis 11.

## Claims

1. Adjustable rear viewing device (2), more particularly exterior mirror, for a motor vehicle with a mirror head (4), with a mirror foot (6) and with at least one hinge device (8) disposed between mirror head (4) and mirror foot (6), which hinge device comprises at least one elastomer element (10) and a rotational axis (12), around which the mirror head (4) can be moved, more particularly turned or folded, in relation to the mirror foot (6) from a first functional position, in which the mirror head (4) is held by the elastomer element (26), into at least a second functional position, in which the elastomer element (26) is stretched or compressed, and with at least one electric means of conduction (16), which is extended at least between mirror foot (6) and mirror head (4) and through which electric energy can be conveyed, **characterised in that** the at least one electric means of conduction (16) is elastically deformable at least in the direction of its longitudinal extension.

2. Rear viewing device (2) according to claim 1, **characterised in that** the at least one electric means of conduction (16) comprises at least one carbon nanotube or a plurality of carbon nanotubes.

3. Rear viewing device (2) according to claim 1 or 2, with at least one, more particularly electrically insulating, means of insulation (20) for the at least one electric means of conduction (16).

4. Rear viewing device (2) according to claim 3, **characterised in that** the at least one carbon nanotube comprises at least one unoxidised inner current-conducting layer and at least one oxidised outer insulating layer, which more particularly comprises the means of insulation (20) and/or surrounds the at least one carbon nanotube from outside at least almost in its entirety.

5. Rear viewing device (2) according to claim 3 or 4, **characterised by** an additional insulation element (28), which forms a further layer of insulation for the electric means of conduction (16).

6. Rear viewing device (2) according to at least one of the preceding claims, **characterised in that** the at least one electric means of conduction (16) is disposed running at least predominantly within the elastomer element (10) at least in the area of the hinge device (8).

7. Rear viewing device (2) according to at least one of the preceding claims, **characterised by** at least one energy storage (22), more particularly a nanotube capacitor, arranged in the mirror head (4).

8. Rear viewing device (2) according to at least one of the preceding claims, **characterised by** at least two electric means of conduction, wherein a first electric means of conduction is connectable or connected indirectly or directly with an electric consumer (14), such as an illuminant, more particularly LED, or electric motor and/or wherein at least a second electric means of conduction is connectable or connected directly or indirectly with the at least one energy storage.

9. Rear viewing device (2) according to at least one of the preceding claims, **characterised by** at least one control unit (24) with at least one deposed control logic, to prioritise the allocation of electric energy to a plurality of electric consumers, by the at least one electric means of conduction (16) and/or by the at least one energy storage (22).

10. Rear viewing device (2) according to at least one of the preceding claims, **characterised in that** the elastomer element (10) is moulded onto the mirror head (4) and/or onto the mirror foot (6) and/or that the elastomer element and the at least one electric means of conduction (16) are integrated into the mirror head (4) or the mirror foot (6) by means of a multi-component injection-moulding process.

11. Rear viewing device (2) according to at least one of the preceding claims, **characterised by** at least one means of contact (18) of the electric means of conduction (16), which can be disposed on the end of the means of conduction facing the motor vehicle and with which a connection to a current source of the motor vehicle can be established.

12. Method for producing an hinge device (8) of a rear viewing device (2) according to any one of the claims 1 to 11, with a mirror foot (6), with a mirror head (4), with at least one elastomer element (10) and with at least one electric means of conduction (16), which is elastically deformable at least in the direction of its longitudinal extension, with the steps:
a. positioning or inserting of the mirror foot (6) into an injection moulding tool;
b. positioning or inserting of the mirror head (4) into the injection moulding tool;
c. insertion of the at least one electric means of conduction (16);
d. injection of the multi-component elastomer element (10).

13. Method according to claim 12, **characterised in that** the injection of the multi-component elastomer element (10) comprises moulding of the elastomer element (10) onto the mirror foot (6) and/or onto the mirror head (4).

14. Method according to claim 12 or 13, **characterised by** the step:
e. overmoulding of the at least one electric means of conduction (16) with an additional insulation element (28).

15. Motor vehicle with at least one rear viewing device (2) according to any one of the claims 1 to 11.

## Revendications

1. Dispositif de rétroviseur (2) réglable, en particulier rétroviseur extérieur, pour un véhicule automobile avec une tête de rétroviseur (4), avec un pied de rétroviseur (6) et avec au moins un dispositif d'articulation (8) qui est agencé entre la tête de rétroviseur (4) et le pied de rétroviseur (6) et qui comprend au moins un élément élastomère (10) et un axe de rotation (12), autour duquel la tête de rétroviseur (4) est mobile, en particulier est rotative ou rabattable, par rapport au pied de rétroviseur (6) d'une première position fonctionnelle, dans laquelle la tête de rétroviseur (4) est maintenue par l'élément élastomère (26), à au moins une seconde position fonctionnelle, dans laquelle l'élément élastomère (26) est étiré ou refoulé, et avec au moins un moyen de ligne électrique (16) qui est étendu au moins entre le pied de rétroviseur (6) et la tête de rétroviseur (4) et par lequel peut être transportée de l'énergie électrique, **caractérisé en ce que** l'au moins un moyen de ligne électrique (16) est déformable élastiquement au moins en direction de son étendue longitudinale.

2. Dispositif de rétroviseur (2) selon la revendication 1, **caractérisé en ce que** l'au moins un moyen de ligne électrique (16) comprend au moins un nanotube de carbone ou une pluralité de nanotubes de carbone.

3. Dispositif de rétroviseur (2) selon la revendication 1 ou 2, avec au moins un moyen d'isolation (20), en particulier isolant électriquement, pour l'au moins un moyen de ligne électrique (16).

4. Dispositif de rétroviseur (2) selon la revendication 3, **caractérisé en ce que** l'au moins un nanotube de carbone comprend au moins une couche électriquement conductrice intérieure non oxydée et au moins une couche isolante extérieure oxydée qui comprend en particulier le moyen d'isolation (20) et/ou qui entoure au moins un nanotube de carbone de l'extérieur au moins presque en totalité.

5. Dispositif de rétroviseur (2) selon la revendication 3 ou 4, **caractérisé par** un élément d'isolation (28) supplémentaire qui forme une autre couche d'isolation pour le moyen de ligne électrique (16).

6. Dispositif de rétroviseur (2) selon au moins l'une des revendications précédentes, **caractérisé en ce que**
l'au moins un moyen de ligne électrique (16) est agencé s'étendant au moins dans la zone du dispositif d'articulation (8) au moins principalement dans l'élément élastomère (10).

7. Dispositif de rétroviseur (2) selon au moins l'une des revendications précédentes, **caractérisé par**
au moins un accumulateur d'énergie (22) agencé dans la tête de rétroviseur (4), en particulier un condensateur à nanotube.

8. Dispositif de rétroviseur (2) selon au moins l'une des revendications précédentes, **caractérisé par**
au moins deux moyens de ligne électriques, dans lequel un premier moyen de ligne électrique est ou peut être relié directement ou indirectement à un consommateur électrique (14) tel que des moyens d'éclairage, en particulier une DEL, ou un moteur électrique et/ou dans lequel au moins un second moyen de ligne électrique est ou peut être relié directement ou indirectement à l'au moins un accumulateur d'énergie.

9. Dispositif de rétroviseur (2) selon au moins l'une des revendications précédentes, **caractérisé par**
au moins une unité de commande (24) avec au moins une logique de commande enregistrée pour la priorisation de l'attribution d'énergie électrique à une pluralité de consommateurs électriques, par l'au moins un moyen de ligne électrique (16) et/ou par l'au moins un accumulateur d'énergie (22).

10. Dispositif de rétroviseur (2) selon au moins l'une des revendications précédentes, **caractérisé en ce que**
l'élément élastomère (10) est formé sur la tête de rétroviseur (4) et/ou sur le pied de rétroviseur (6) et/ou **en ce que** l'élément élastomère et l'au moins un moyen de ligne électrique (16) sont intégrés au moyen d'un procédé de moulage par injection à plusieurs composants dans la tête de rétroviseur (4) ou le pied de rétroviseur (6).

11. Dispositif de rétroviseur (2) selon au moins l'une des revendications précédentes, **caractérisé par**
au moins un moyen de contact (18) du moyen de ligne électrique (16) qui peut être agencé sur l'extrémité tournée vers le véhicule automobile du moyen de ligne et avec lequel une liaison avec une source de courant du véhicule automobile peut être établie.

12. Procédé de fabrication d'un dispositif d'articulation (8) d'un dispositif de rétroviseur (2) selon l'une des revendications 1 à 11, avec un pied de rétroviseur (6), avec une tête de rétroviseur (4), avec au moins un élément élastomère (10) et avec au moins un moyen de ligne électrique (16) qui peut être déformé élastiquement au moins en direction de son étendue longitudinale, avec les étapes suivantes :
a. la pose ou l'insertion du pied de rétroviseur (6) dans un outil de moulage par injection ;
b. la pose ou l'insertion de la tête de rétroviseur (4) dans l'outil de moulage par injection ;
c. l'insertion de l'au moins un moyen de ligne électrique (16) ;
d. l'injection de l'élément élastomère à plusieurs composants (10).

13. Procédé selon la revendication 12, **caractérisé en ce que**
l'injection de l'élément élastomère à plusieurs composants (10) comprend une formation de l'élément élastomère (10) sur le pied de rétroviseur (6) et/ou sur la tête de rétroviseur (4).

14. Procédé selon la revendication 12 ou 13, **caractérisé par** l'étape suivante :
e. l'extrusion de l'au moins un moyen de ligne électrique (16) avec un élément d'isolation (28) supplémentaire.

15. Véhicule automobile avec au moins un dispositif de rétroviseur (2) selon l'une des revendications 1 à 11.
